Europäisches Patentamt

(19) European Patent Office

Office européen des brevets

(11) EP 0 780 844 A2

## (12) EUROPEAN PATENT APPLICATION

(43) Date of publication:
25.06.1997 Bulletin 1997/26

(21) Application number: 96118605.3

(22) Date of filing: 19.11.1996

(51) Int. Cl.6: **G11B 27/034**, G11B 27/28, H04N 5/14, H04N 5/262, G06F 17/30

(84) Designated Contracting States:
AT BE CH DE FR GB LI NL

(30) Priority: 21.12.1995 US 576271

(71) Applicant: SIEMENS CORPORATE RESEARCH, INC.
Princeton, New Jersey 08540 (US)

(72) Inventors:
- Liou, Shih-Ping
  Robbinsville, NJ 08691 (US)
- Loghing, David L.
  Huntingdon Valley, PA 19006 (US)
- Arman, Farshid
  Hamilton, NJ 08690 (US)

(74) Representative: Fuchs, Franz-Josef, Dr.-Ing. et al
Postfach 22 13 17
80503 München (DE)

### (54) Cut browsing and editing apparatus

(57) Cut browsing apparatus for video images includes a video player, a video browser, coupled to the video player, a cut browser coupled to the video browser, and a display, coupled to the foregoing. The display provides on a screen respective window displays for each of the video player, video browser, and cut browser, such that activities in all three are completely synchronized.

FIG. 4

## Description

Video is being generated at an ever-increasing rate everyday. In order to use information from such video repositories efficiently and effectively, they must be properly indexed into a database. The most fundamental and important task in this process is to parse the video into an appropriate set of units, which are known as shots. Most existing approaches are based on preset thresholds or improper assumptions which reduce their applicability to a limited range of video types.

The following description of the present invention also includes a mathematical formulation of the problem, a fast and robust implementation of the mathematical formulation, and a cut browsing apparatus. Performance has been demonstrated on over 149,000 video frames that include various video types such as sports and movies.

Sources of videos include defense/civilian satellites, scientific experiments, biomedical imaging, fingerprinting devices, and home entertainment systems. In order to use information from such video repositories efficiently and effectively, videos must be properly indexed into a database. Video indexing provides a fast and accurate way to access desired video data based on its contents. The most fundamental and important task in this process is to parse the video into an appropriate set of units, which are known as shots.

A shot in video refers to a contiguous recording of one or more video frames depicting a continuous action in time and space. In a shot, camera could remain fixed, or it may exhibit one of the characteristic motion such as panning, tilting, or tracking. For most videos, shot changes or cuts are created intentionally by video/film directors. In the early years, they were done on a splicer and an optical printer, while shot lists were kept on paper records, the count sheets.

Since 1985, most shot changes have been generated using modern editing machines. Information on each individual shot is retained electronically on an Editing Decision List (EDL), which can be indexed directly into a database. However, for most videos/films that were produced before the invention of such machines, this information, which was recorded on paper, may no longer be accessible. This is certainly true for home videos and raw sports films, since cuts are generated by turning the camcorders/film cameras on and off. In either case, cuts will have to be detected from the video through manual or automatic means.

Unlike what is claimed in the literature, the isolation of shots in a video is not a trivial task considering the complexity of a scene and the efficacy of modern editing technologies.

The transition from one shot to another may include visually abrupt straight cuts or camera breaks. It may also include such effects as fades, dissolves, wipes, flips, superimposures, freeze or hold frames, flop-overs, tail-to-head reverses, blow-ups, move-ins, repositions, and skip frames. See, for example, B. Balmuth, Introduction to Film Editing, Focal Press, 1989.

Since the purpose of video indexing is to aid the retrieval of desired video clips from a database, it is important that a 100% recall rate and maximum precision rate be maintained. Here, a recall rate is defined as the percentage of the actual cuts that are detected and a precision rate, the percentage of the detected cuts that are actual cuts.

Most existing approaches deal with very specific cases of few of the above transition types and even then a 100% recall rate is never achieved. In addition, they are often tested on few types of videos and few thousand video frames, insufficient to make any realistic judgment on the performance of individual algorithms. Most existing algorithms can not be implemented near video rate, imposing a serious constraint on the range of applications they can be used for. More importantly, they are often based on preset thresholds or improper assumptions which reduce their applicability to a limited range of video types.

Reference is also made to the following U.S. patent applications as containing material of close interest to the present application: U.S. Patent Application Serial No. 08/221,227 filed March 31, 1994 in the name of Arman et al.; U.S. Patent Application Serial No. 08/221,225 filed March 31, 1994 in the name of Arman et al.; U.S. Patent Application Serial No. 08/221,221, filed March 31, 1994 in the name of Arman et al.; U.S. Patent Application Serial No. 08/343,793 filed November 22, 1994 in the name of Arman et al.; U.S. Patent Application Serial No. 08/346,453, filed November 29, 1994 in the name of Benson et al.

It is herein recognized that a good cut detection method is one that can

— provide the maximum recall and precision rate for visually abrupt cuts and camera breaks,
— detect cuts, from reading the video to the output of shot change frames, close or near the video rate,
— considers the nonstationary nature of the cut detection problem,
— have a feedback mechanism to achieve a 100\% recall rate, work on a variety of videos and big number of video frames, and
— is independent of the encoders and different encoding algorithms, when applied to compressed video.

In accordance with an aspect of the invention, cut browsing and editing apparatus for video images comprises a video player, a a video browser, coupled to the video player, and a cut browser coupled to the video browser.

In accordance with another aspect of the invention, the video player and the cut browser present only raw video material.

In accordance with another aspect of the invention, the cut browser presents material at a different level of abstraction to that presented by the video player and the video browser presents interpreted information about shots in the video images.

In accordance with yet another aspect of the invention, cut browsing apparatus for video images, comprises a video player, a video browser, coupled to the video player, a cut browser coupled to the video browser, and a display, coupled to the foregoing, the display providing a three-window display on a screen.

In accordance with yet another aspect of the invention, each window of the three-window display is respectively allocated to one of the ideo player, video browser, and the cut browser.

In accordance with still another aspect of the invention, the windows respond synchronously activities including computer mouse pointer control, scrolling, and high-lighting.

In accordance with still another aspect of the invention, the video browser displays detected shots using representative frames (Rframes), and the cut browser displays a cross sectional image made from an entire video sequence.

In accordance with still yet another aspect of the invention, a user can select, as by mouse clicking, a point on the cross sectional image on the cut browser so as to view a corresponding image in raw video playback on the video player.

In accordance with still yet another aspect of the invention, the cut browser permits editing by a user so as to break a shot into two shots and so as to merge any two shots into one, as by clicking a mouse.

In accordance with a further aspect of the invention, the editing causes resegmenting of the cross sectional image.

In accordance with still a further aspect of the invention, apparatus is included for presenting two cross-section images of the video images, a horizontal cross section image one is in a horizontal direction and a verical cross section image in a vertical direction of the video volume.

In accordance with still a further aspect of the invention, cut browsing apparatus for video images, comprises a video player, a video browser, coupled to the video player, a cut browser coupled to the video browser, and a display, coupled to the foregoing, the display providing a three-window display on a screen, wherein each window of the three-window display is respectively allocated to one of the ideo player, video browser, and the cut browser. The windows respond synchronously activities including computer mouse pointer control, scrolling, and high-lighting. The video browser displays detected shots using representative frames (Rframes), and the cut browser displays two cross-section images of the video images, a horizontal cross section image one in a horizontal direction and a verical cross section image in a vertical direction of the video volume.

In accordance with yet a further aspect of the invention, each cross-section image is constructed by sampling one row (or column) from every image, and reducing the amount of information from a two-dimensional image to two one-dimensional image strips.

In accordance with yet a further aspect of the invention, the horizontal and vertical cross-section images are combined into one image segmented into two bands according to a list of detected shots, whereby a level of abstraction is presented that is just enough to reveal whether there is a missed or misdetected shot.

In accordance with still yet a further another aspect of the invention, cut browsing apparatus for video images comprises a video player, a video browser, coupled to the video player, a cut browser coupled to the video browser, and a display, coupled to the foregoing, the display providing on a screen respective window displays for each of the video player, video browser, and cut browser, such that activities in all three are completely synchronized.

In accordance with yet a further aspect of the invention, the windows respond synchronously activities including computer mouse pointer control, scrolling, and high-lighting.

In accordance with still yet a further aspect of the invention, a user can select an image, as by mouse clicking, to view on the cut browser an image corresponding to a selected raw video image on the video player.

The invention will be more clearly understood from the following detailed description of preferred embodiments, in conjunction with the Drawing, in which

Figure 1 shows that a traditionally used, prior art, cut detection algorithm can be categorized as a process comprising four steps, data acquisition, difference metric collection, detection, and decision, wherein the dashed boxes indicate optional steps which can be found in some algorithms and wherein the delay circuit is a mechanism to utilize information from both the past and the future frames;

Figure 2 shows four types of 3:2 pulldown;

Figure 3 show a histogram of a typical inter-frame difference image that does not correspond to a shot change;

Figure 4 shows browsing apparatus in accordance with the invention;

Figure 5(a) shows two cross sections in video volumes and Figure 5(b) shows a space-time image made up of two cross sections, useful in understanding the invention;

Figure 6 shows examples of cross section patterns in accordance with the invention, wherein Figure 6(a) shows visually abrupt cuts and Figure 6(b) shows gradual shot transitions, in black and white, and Figure 6(c) and 6(d) being the same figures in color;

Figure 7 shows a flow diagram of a cut detection algorithm in accordance with the invention;

Figure 8 shows a sub flow diagram of the difference metric collection step in accordance with the invention;

Figure 9 shows a sub flow diagram of the adaptation step in accordance with the invention;

Figure 10 shows the membership function of contrast estimate in accordance with the invention;

Figure 11 shows the membership function of motion estimate in accordance with the invention;

Figure 12 shows the membership function of $K_\alpha$ which is proportional to significance level in accordance with the invention;

Figure 13 shows a sub flow diagram of the detection step in accordance with the invention;

Figure 14 shows an example of trend estimation, wherein Figure 14(a) shows that a type I observation outlier is detected and Figure 14(b) shows that a type II observation outlier is detected; and

Figure 15 shows cut browser apparatus incorporating the invention, 15(a) being in black and white and 15(b) being the same figure in color.

This present invention relates to an automatic cut detection method and a cut browsing apparatus that satisfy all criteria listed above. The cut detection is formulated as a non-stationary time series outlier detection problem.

The efforts on cut detection can be traced back to D. Coll and G. Choma, ``Image Activity Characteristics in Broadcast Television," IEEE Trans. on Communications, Vol. 26, pp.1201-1206, 1976, where the authors perform an extensive experimental study of frame difference signals using four different types of videos, a football game, a drama show, a talk show, and a cartoon. The authors divide each uncompressed video frame into 8x8 blocks, each of which is represented by its average grayscale value. In their study, the average of the magnitudes of the differences between corresponding blocks of consecutive frames is used as the difference metric. Coll and Choma show that a threshold determined experimentally can detect shot changes that match the accuracy of a human observer. More scene change detection algorithms based on uncompressed video can also be found in the computer vision literature. See for example, I. Sethi, V. Salari, and S. Vemuri, ``Image Sequence Segmentation using Motion Coherence," Proc. First International Conference on Computer Vision}, pp.667-671, 1987; Y. Z. Hsu, H.-H. Nagel, and G. Pekers, ``New Likelihood Test Methods for Change Detection in Image Sequences," CVGIP, 26, pp. 73-106, 1984. I. Sethi, V. Salari, and S. Vemuri, ``Image Sequence Segmentation using Motion Coherence," Proc. First International Conference on Computer Vision, pp.667-671, 1987.

Digital video can be stored and transmitted in compressed form. See Joint Photographic Experts Group (JPEG); ISO/IEC JTC1 SC29 WG1, JPEG}, ISO/IEC 10 918; Moving Picture Experts Group (MPEG) ISO/IEC JTC1 SC29 WG11, MPEG-1, ISO/IEC 11 172, and MPEG-2, ISO/IEC 13 818, and International Telegraph and Telephone Consultative Committee (CCITT) CCITT, Recommendation H.261, Video Codec for Audiovisual Services at px64 kbits/s, Dec. 1990.

Performing cut detection as well as image processing on compressed video saves unnecessary decompression-compression effort. This idea led to many efforts in pursuing solutions that can process compressed video directly, as disclosed by F. Arman et al. in U.S. patent applications serial No. 08/221,227 and 08/221,227, presently pending. Arman et al. have developed a scene change detection algorithm for JPEG and movie-JPEG video, where a subset of Discrete Cosine Transform (DCT) coefficients is used to characterize the underlying frame. Unfortunately, full DCT coefficients are difficult or impractical to obtain in MPEG or H.261 video without full scale decoding. This is because motion vectors are quantities in the spatial domain, while DCT coefficients are quantities in the frequency domain.

Other researchers have proposed to use motion vectors directly either to filter out scene change frames or to detect scene cuts See, for example, H.-C. H. Liu and G. L. Zick, ``Scene Decomposition of MPEG Compressed Video," SPIE Vol. 2419, Digital Video Compression Algorithms and Technologies, pp.26-37, 1995; J. Meng, Y. Juan, and S.-F. Chang, ``Scene Change Detection in a MPEG Compressed Video Sequence," SPIE Vol. 2419, Digital Video Compression Algorithms and Technologies, pp.1 4-25, 1995; and H. Zhang, C. Y. Low, and S. W. Smoliar, ``Video Parsing and Browsing Using Compressed Data," Multimedia Tools and Applications, 1, pp.89-111, 1995.

They are often based on the ratio of number of forward-predicted macro blocks and the total number of macro blocks. Since there is no standard criterion in determining whether a certain macro block should be inter-coded (temporarily predicted from a previous reconstructed picture) or intra-coded (like a baseline JPEG picture) during the encoding process, this approach is very sensitive to different encoders and types of encoding algorithms.

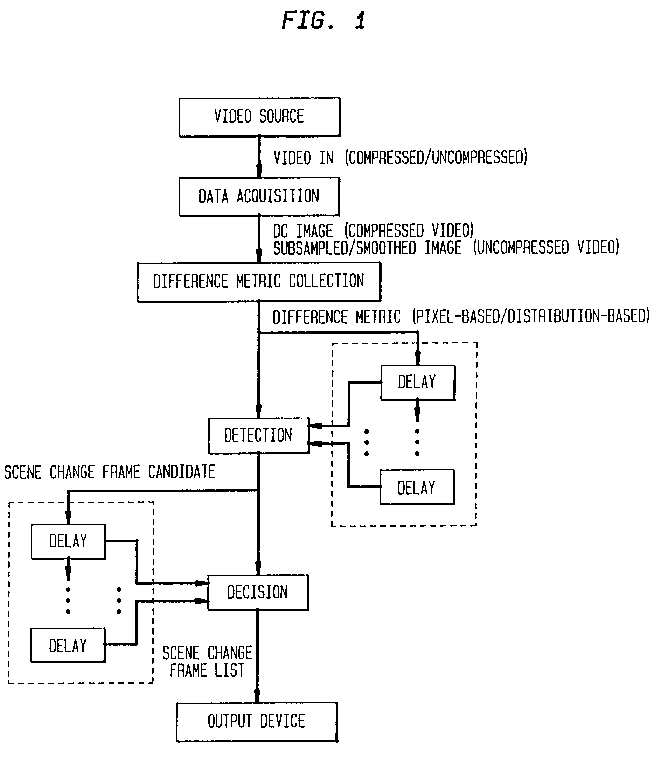

Most cut detection algorithms in the literature, whether or not they take uncompressed or compressed video data, can be categorized, as a process comprising four steps: data acquisition, difference metric collection, detection, and decision, as illustrated in Figure 1. The dashed boxes indicate optional steps, which are found in some algorithms. The delay circuit is a mechanism to use information from both past and future frames.

During the data acquisition stage, compressed video based approaches often extract DCT coefficients or motion vectors. See, for example, the above-cited application of Arman et al.; H. Ishikawa and H. Matsumoto, ``Method for Detecting a Scene Change and Image Editing Apparatus," European Patent 0-615-245-A2, filed July 3, 1994; H.-C. H. Liu and G. L. Zick, ``Scene Decomposition of MPEG Compressed Video," SPIE Vol. 2419, Digital Video Compression Algorithms and Technologies, pp.26-37, 1995. There are a total of 64 DCT coefficients, including one DC (the base frequency in the DCT coefficients) term and 63 AC (the higher frequencies in the DCT coefficients) terms. The amount of decoding varies among different algorithms. Some only decode DC terms, see, for example, J. Meng, Y. Juan, and S.-F. Chang, ``Scene Change Detection in a MPEG Compressed Video Sequence," SPIE Vol. 2419, Digital Video Compression Algorithms and Technologies, pp.14-25, 1995, while others only extract the number of forward-coded and backward-coded motion vectors, see, for example, H.-C. H. Liu and G. L. Zick, ``Scene Decomposition of MPEG Compressed Video," SPIE Vol. 2419, Digital Video Compression Algorithms and Technologies, pp.26-37, 1995.

Most such algorithms try to avoid full scale decoding in order to be computationally efficient. For approaches that use uncompressed video data, each digitised image is often smoothed or sub-sampled; see, for example, P. Aigrain and P. Joly, ``The Automatic Real-Time Analysis of Film Editing and Transition Effects and its Applications," Computer and Graphics, Vol. 18, No. 1, pp.93-103, 1994.

Once video data is acquired, except for those algorithms that use motion vector information explicitly, most in the literature collect one difference metric per frame. Such difference metric, in general, can be categorized into pixel-based and distribution-based types.

In the pixel-based category, the most popular difference metric is the sum of squared difference, namely

$$d_t = \sum_{ij} (f^t_{ij} - f^{t-1}_{ij})^2$$

where $f^t_{ij}$ represents the intensity value at pixel location (i, j) in frame t. An alternative choice for less computation is the sum of absolute difference

$$d_t = \sum_{ij} |f^t_{ij} - f^{t-1}_{ij}|$$

Both difference metrics are sensitive to large camera moves, leading to numerous false positives in cut detection. To overcome this problem, many researchers either smooth video frames, or down sample them, before taking the pixel based differences. This additional step often improves the precision rate of cut detection algorithms significantly.

Distribution-based difference metrics, on the other hand, are less influenced by camera moves. A likelihood measure was first proposed in the late 70's based on the intensity mean and variance of the current and the previous frame. See Y. Z. Hsu, H.-H. Nagel, and G. Pekers, ``New Likelihood Test Methods for Change Detection in Image Sequences," CVGIP, 26, pp. 73-106, 1984. If $\mu_t$ and $\sigma_t$ are used to represent the intensity mean and variance of the frame t respectively, the likelihood based difference metric can be defined as

$$d_t = \frac{[\frac{\sigma_t + \sigma_{t-1}}{2} + (\frac{\mu_t - \mu_{t-1}}{2})^2]^2}{\sigma_t \sigma_{t-1}} \tag{1}$$

Other existing distribution-based difference measure are based on histograms. The image histograms of the $t^{th}$ frame is denoted by $H_t$. Let $H_t(j)$ be the pixel counts in bin j of the histogram $H_t$. If the total number of bins is N, one can compute either:

$$d_t = \sum_{j=1}^{N} \frac{|H_t(j) - H_{t-1}(j)|^2}{H_{t-1}(j)} \tag{2}$$

or

$$d_t = \sum_{j=1}^{N} \frac{(H_t(j) - H_{t-1}(j))^2}{(H_t(j) + H_{t-1}(j))^2} \tag{3}$$

Either one of them can be used as a distribution-based difference metric. The bin size N in either measure affects the sensitivity of the cut detection algorithm. The smaller the bin size is, the more sensitive the histogram measure will be. In most existing methods, a fixed bin size is used throughout all intensity ranges.

Recently, a third type of distribution-based difference metric has been proposed. See I. K. Sethi and N. Patel, ``A Statistical Approach to Scene Change Detection,'' SPIE Vol. 2420, Storage and Retrieval for Image and Video Databases III, pp. 329-338, 1995. This metric is based on the empirical distribution function (EDF) of the previous and current frames. It is called the Kolmogorov-Smirnov test metric.

$$d_t = \max_j |EDF_t(j) - EDF_{t-1}(j)| \tag{4}$$

In order to compute the empirical distribution function, one first constructs the histogram of each individual video frame. Assume that the histogram for frame t is represented by $\{ H_t(j) | j = 1, N \}$. $EDF_t(j)$, which represents the cumulative distribution probability of the jth intensity value in frame t, can then be defined by

$$EDF_t(1) = \frac{H_t(1)}{M}$$

$$EDF_t(j) = EDF_t(j-1) + \frac{H_t(j)}{M} , j = 2, N$$

where M is the total number of pixels in the image.

After the difference metric is collected for each frame, most algorithms simply apply a preset threshold to this time series of difference metrics. The algorithm compares the value of difference metric with a global threshold. If it is above this preset number, a shot change is signaled. Since it is difficult to find such a threshold for an entire video, some researchers have also proposed the use of two thresholds. See, for example, H. Zhang, A. Kankanhalli, and S. W. Smoliar, ``Automatic Parsing of Full-Motion Video,'' ACM Multimedia Systems, 1, pp.10-28, 1993.

Recently, rank-based detection schemes have become very popular. See, for example, P. Aigrain and P. Joly, ``The Automatic Real-Time Analysis of Film Editing and Transition Effects and its Applications,'' Computer and Graphics, Vol. 18, No. 1, pp.93-103, 1994.

Since global thresholds are hard to find, the idea is that thresholds should be applied only to difference metrics in a local temporal neighborhood. This local temporal neighborhood approach is indicated as the dashed box attached to the detection step in Figure 1. In order for this to work, a new difference metric is computed in the detection step from every local temporal window centered around the current frame. Denote $d_t$ as the difference metric for frame t in the form of sum of squared differences (or sum of absolute differences) and assume that the size of the temporal window is 2N+1. If the 2N+1 observations $d_i$, $i = t-N, t+N$ are ordered $\hat{d}_1 < \hat{d}_2 < \cdots < \hat{d}_{2N+1}$, the new metric $\hat{d}_t$ is often computed in one of the following three ways.

$$\hat{d}_t = 0 \quad if \quad d_t \neq \hat{d}_{2N+1};$$
$$\hat{d}_t = \frac{\hat{d}_{2N+1}}{\hat{d}_{2N}} \quad otherwise \tag{Eq. 5}$$

or

$$\hat{d}_t = 0 \; if \; d_t \neq \hat{d}_{2N+1}; \tag{Eq. 6}$$

$$\hat{d}_t = \hat{d}_{2N+1} - \hat{d}_{2N} \text{ otherwise}$$

or

$$\tilde{d}_t = 0 \quad if \quad d_t \neq \hat{d}_{2N+1};$$
$$\tilde{d}_t = \frac{\hat{d}_{2N+1}}{\sum_{i=1}^{2N} \hat{d}_i} \quad otherwise \qquad \text{Eq. 7}$$

The preset threshold will then be applied to this sequence of new metrics $\hat{d}_t$. Most algorithms that use Equation 5 or Equation 7 favor N = 2 and a number between 3 and 4 as the best threshold choice.

All detection schemes discussed so far are based on preset thresholds and they do not treat cut detection as a hypothesis testing problem. On the other hand, there are a few cut detection algorithms, that are based on hypothesis testing paradigms. All such algorithms can be categorized into two different types. The first formulation views a sequence of difference metrics as a set of samples drawn from a single known distribution, if they are derived from images within the same shot. The second formulation views them as a set of samples drawn from a single but unknown distribution. Note here that the difference metric could be computed from each individual frame or from any two neighboring frames. These formulations transform the cut detection problem into the following two problems respectively:

Case 1: Can one disprove, to a certain required level of significance, the null hypothesis that difference metric is a sample drawn from a known distribution?

Case 2: Can one disprove, to a certain required level of significance, the null hypothesis that the previous and the current difference metric are samples drawn from the same distribution?

In both cases, either pixel-based or distribution-based difference metrics can be used. However, the underlying distribution in the second case does not have to be known in advance. Each formulation will next be explained in more detail.

Regarding Case 1, work on modeling frame difference signals can be traced back to the 1960's. Seyler first studied the nature of frame difference signals and showed that the gamma distribution provides a good fit to the probability density function of the fraction of pixels whose change is above a threshold. See A. J. Seyler, ``Probability Distributions of Television Frame Differences,'' Proceedings of I.R.E.E. Australia, pp.355-366, November 1965. An analytic expression is derived for the probability density functions approximating the experimentally recorded frame difference distributions and is simply the following:

$$h(\overline{D}) = (\Gamma(\alpha)\,\beta^\alpha)^{-1}\overline{D}^{\alpha-1}\exp\left(-\frac{\overline{D}}{\beta}\right)$$

where $\overline{D}$ is the fraction of pixels whose change is above a threshold and the parameters $\alpha$ and $\beta$ are given by the computed mean $\mu_{\overline{D}}$ and standard deviation $\sigma_{\overline{D}}$ of the experimental distribution, as

$$\alpha = \left(\frac{\mu_{\overline{D}}}{\sigma_{\overline{D}}}\right)^2 \qquad \beta = \frac{\sigma_{\overline{D}}^2}{\mu_{\overline{D}}}$$

It is however not clear how sensitive this conclusion is to the choice of thresholds.

An alternative model for frame difference signals is that the corresponding difference $d_{ij}(=f_{ij}^n - f_{ij}^{n-1})$ at pixel location $(i,j)$ follows a zero-mean Gaussian distribution with variance $\sigma_{ij}^2$. The unknown parameter $\sigma_{ij}$ can be estimated from the image sequence directly. To simplify the model, it is often assumed that the random variables are i.i.d. (independently identically distributed), therefore

$$\sigma_{ij} = \sigma \text{ for all } (i,j)$$

Following this, it is shown in T. Aach, A. Kaup, and R. Mester, ``Statistical Model-Based Change Detection in Moving Video," Signal Processing, 31, pp 165-180, 1993 that

$$\sum_{ij}(\frac{d_{ij}}{\sigma})^2$$

obeys a $\chi^2$ distribution with as many degrees of freedom as the number of pixels in the image.

$d_{ij}$ can also be modeled as obeying a Laplace distribution, i.e.,

$$p(d_{ij})=\frac{\gamma}{2}\exp\{-\gamma|d_{ij}|\}$$

where $\gamma=\frac{\sqrt{2}}{\sigma}$ and $\sigma^2$ is the variance of this probability density function. It is then shown in Aach et al. op. cit. that $p(2\Sigma\gamma|d_{ij}|)$ follows a $\chi^2$ distribution with twice as many degrees of freedom as the number of pixels in the image.

Among distribution-based difference metrics, the difference metric constructed using equation (1) is based on the assumption that images are samples drawn from $N(\mu_t,\sigma_t)$. This metric is essentially the maximum likelihood ratio of

$$\frac{L(H_1)}{L(H_0)} ,$$

where $L(x)$ is the likelihood of event $x$ and $H_0$:frames $t$-1 and $t$ come from the same distribution $N(\mu_{t-1},\sigma_{t-1})$ $H_1$:frames $t$-1 and $t$ come from different distributions $N(\mu_{t-1},\sigma_{t-1})$ and $N(\mu_t,\sigma_t)$.

For the difference metric constructed using equation (2) and (3), it can also be shown that both satisfy the $\chi^2$ distribution. See J. D. Gibbons and S. Chakraborti, Nonparametric Statistical Inference, Marcel Dekker, Inc., 1992 The $\chi^2$ test detects whether an observed frequency distribution in a sample arise from the assumed theoretical distribution. Such distributions could be a true binomial, Poisson, normal, or some known type of distribution in the population. Usually, the parameters of this distribution is not known. It may be shown that, if $s$ parameters are estimated by the method of maximum likelihood, the limiting distribution of

$$\sum_{j=1}^{N}\frac{|H_t(j)-H_{t-1}(j)|^2}{H_{t-1}(j)}$$

is that of $\chi^2$ with $N$-$s$-1 degrees of freedom.

For Case 2, the most commonly used statistical approach of this type is the Kolmogorov-Smirnov test. The Kolmogorov-Smirnov test is concerned with the agreement of two sets of observed values and the null hypothesis is that two samples come from populations with the same distribution function $F(x)$. It can be shown that the test statistic $d_t$ as in Equation (4) satisfies

$$Prob(d_t>K_\alpha\sqrt{\frac{2}{N}})=\alpha$$

where $K_\alpha$ represents a constant depending on the level of significance $\alpha$ and is available in tabular form from most statistics books. $N$ is the size of the image the statistic is collected upon.

Unlike the test discussed just above, the Kolmogorov-Smirnov test does not assume any it a priori information about the type of distribution functions.

The decision stage is often set up to eliminate detected cuts that are false positives due to flash light or slow/fast motion in the scene. The list of detected cut frames is stored in a delay memory as shown by the dashed box attached to the decision step in Figure 1. The criterion usually states that the minimum distance between two cuts has to be greater than a preset number.

Most existing approaches are based on preset thresholds or improper assumptions which reduce their applicability to a limited range of video types. For example, incorrect assumptions have frequently been made about how shots are connected in videos, ignoring the realities of how films/videos are produced and edited. The nonstationary nature of the cut detection problem has often been ignored, as well as the fact that many videos are converted from films in the design of their cut detection algorithm.

In the following section, the cut detection problem will be examined from several different viewpoints. Since most shots and shot changes are created intentionally by film/video directors, it is very important to understand techniques commonly used by film/video production and editing professionals. This will provide an idea what types of shots and cuts could be present in films/videos. The commonly used techniques to convert films to videos will also be reviewed. This understanding is very important for developing a robust cut detection algorithm. Finally, different assumptions made by existing methods will be explained and a solution in accordance with the invention will be described.

In the field of film/video production, a few shot classifications are established for directors, camera operators, and editors so that they can use the same language when talking about particular shots. There are three typical shots present in most films/videos.

— static shots, which are taken without moving the camera

The various types of static shots fall into five categories:

close-up, close, medium, full, and long. Different static shots induce different amounts of change from frame to frame. For example, an object's movement in a close shot will produce more significant changes in comparison with a medium or long shot.

— camera moves
The various types of camera moves include zooms, tilts, and pans, or a mixture of the above. The change from frame to frame is a function of the speed at which camera moves. For example, a fast camera pan will induce more significant changes in comparison with a slow camera pan.

— tracking shots, where the camera is moved during the shot
The most popular tracking shots include walking shots, dolly shots, and crane shots. All tracking shots have the tendency to induce unsteadiness, in particular when the object being tracked moves too fast. It is obvious that the amount of change from frame to frame is also a function of how steadily the camera tracks the object.

Since camera/object motion in different shot types result in different amounts of intensity change, the criteria to detect cuts should be different when different types of shots are processed. Otherwise, many false positives and false negatives could occur and thus reduce the recall and the precision rate. Unfortunately, in the type of problem this invention disclosure addresses, shot types are not known in advance. How to adjust the detection criteria to different shot types becomes one of the most important tasks in cut detection.

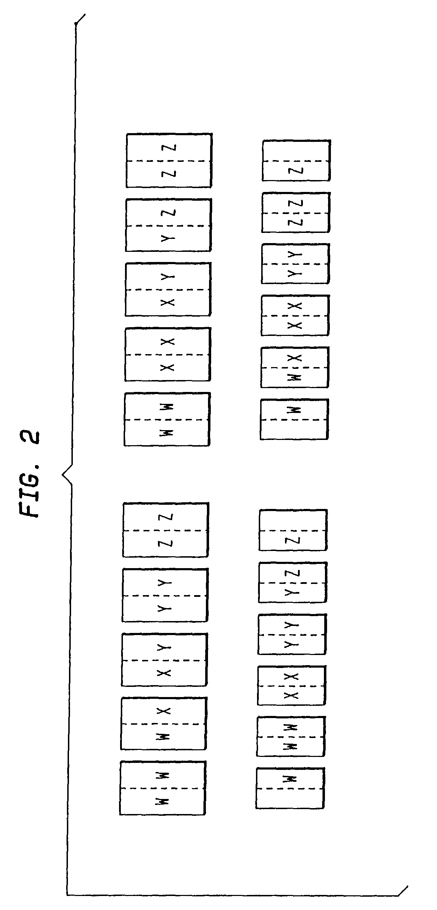

Another important issue to be looked at is the fact that many videos are converted from films, because the two are played at different frame rates. A common conversion process, called a 3-2 pull down, is to make every other film frame a little bit longer. This process is often performed by a telecine machine and may affect many cut detection algorithms. As shown in Figure 2, there are actually four different ways that the 3:2 transfer can take place, as follows. In Figure 2, W, X, Y, Z are four film frames, each of which contains of two fields. By manipulating these field images, one can construct five video frames. (upper left) starting on field 1, alternating 3 fields (upper right) starting on field 1, alternating 2 fields (lower left) starting on field 2, alternating 3 fields (lower right) starting on field 2, alternating 2 fields. Thus:

1. starting on field 1, alternating 3 fields, then 2..3..2..3..2.
2. starting on field 1, alternating 2 fields, then 3..2..3..2..3.
3. starting on field 2, alternating 3 fields, then 2..3..2..3..2.
4. starting on field 2, alternating 2 fields, then 3..2..3..2..3.

In any case, certain video frames are made up of two fields with totally different (although consecutive) pictures in them. As a result, the digitizer can only take one field from each video frame in order to maintain good picture quality. This will result in duplicated frames and almost zero inter-frame differences at five frame intervals in all four cases of 3:2 pulldown. For cut detection methods that are based on pixel-based difference metrics, this may lead to numerous false positives. That is the reason why many existing algorithms based their detection on difference metrics collected in a five or seven frame interval centered around the current frame. See, for example, P. Aigrain and P. Joly, ``The Automatic Real-Time Analysis of Film Editing and Transition Effects and its Applications," Computer and Graphics, Vol. 18, No. 1, pp.93-103, 1994; H. Dubner, ``Video Logging System and Method Thereof," International Patent Classification H04N9/79,5/76, Application Filed November 1993; T. Koga, ``Accurate Detection of a Drastic Change Between Successive Pictures," US Patent 5,032,905, July 16, 1991. A similar problem occurs in animated videos such as cartoons except it produces almost zero inter-frame differences in as often as every other frame.

Most shot transitions are created by film/video directors. Before the invention of modern editing machines, it is often done on a splicer and an optical printer.

The following are the most common shot transition and special effect types that can be created by such devices:

- fade in, the incoming scene gradually appears, starting from dark
- fade out, the outgoing scene gradually disappears, ending in black
- dissolve, comprises an outgoing scene, which fades out, and an incoming scene, that fades in and overlaps the outgoing scene
- the incoming scene is used to literally wipe off the outgoing scene by means of a hard-edged or soft-edged line, as the incoming scene becomes solely and completely visible
- flip, a widening black stripe either on both sides or on both tops of the picture frame, that squeezes out the outgoing scene and simultaneously brings in the incoming scene, thus creating an extremely fast turnover, or revolving, effect
- freeze frame, a particular frame is selected to repeat for any desired length for dramatic or comedic effect
- flop-over, an effect often used to correct misdirection
- tail-to-head reversal, the tail, or end, of the cut becomes the head and the head, the tail.
- skip frames, the elimination of frames to speed up the action
- double printing, the duplicate of frames to slow down the action
- blow up, the blow up of frames to eliminate certain unwanted objects
- move-in, ending in a dissolve to another moving shot
- reposition, adjusting the original angle of a shot
- superimposure, the overlapping of two or more scenes which, unlike those in a dissolve, are simultaneously of constant relative strength.
- montage, any sequence of superimposures

Modern computer technology allows even more ways to create shot transitions. The following are some examples.

- band wipe, the incoming scene is revealed under the outgoing scene by horizontal or vertical bars
- barn doors, the incoming scene is revealed under the outgoing scene from the center outwards
- center merge, the outgoing scene splits into four parts and slides to the center to reveal the incoming scene
- center split, the outgoing scene splits into four parts and slides to the corner to reveal the incoming scene
- checkerboard, two sets of alternating boxes wipe to reveal the incoming scene
- cross stretch, the incoming scene stretches from an edge as the outgoing scene shrinks

For transitions made through visually abrupt straight cuts or camera breaks, the cut detection problem is a relatively well-defined task. However, detecting other types of transitions such as fades, dissolves, wipes, flips, superimposures, freeze or hold frames, flop-overs, tail-to-head reverses, blow-ups, move-ins, repositions, and skip frames, may not be as straightforward. As a matter of fact, most scene transition can be any length an editor wishes, as long as it is consistent with the style, mood, and pacing desired at that moment in the picture. Therefore, the collected difference metrics associated with these shot transitions are often indistinguishable from those associated with gradual camera moves, unless semantic levelinformation such as the image motion pattern is also considered. See, for example, H. Zhang, A. Kankanhalli, and S. W. Smoliar, ``Automatic Parsing of Full-Motion Video," ACM Multimedia Systems, 1, pp.10-28, 1993.

Many existing methods try to model various varieties of shot transitions. See, for example, P. Aigrain and P. Joly, ``The Automatic Real-Time Analysis of Film Editing and Transition Effects and its Applications," Computer and Graphics, Vol. 18, No. 1, pp.93-103, 1994; A. Hampapur, R. Jain, and T. Weymouth, ``Digital Video Segmentation," Proc. ACM Multimedia Conference, pp.357-363, 1994; J. Meng, Y. Juan, and S.-F. Chang, ``Scene Change Detection in a MPEG Compressed Video Sequence," SPIE Vol. 2419, Digital Video Compression Algorithms and Technologies, pp.14-25, 1995; JPEG ISO/IEC JTC1 SC29 WG1, JPEG, ISO/IEC 10 918; T. Koga, ``Accurate Detection of a Drastic Change Between Successive Pictures," U.S. Patent 5,032,905, July 16, 1991; MPEG ISO/IEC JTC1 SC2. B.-L. Yeo and B. Liu, ``Rapid Scene Analysis on Compressed Video," To appear in IEEE Trans. on Circuits and Systems for Video Technology, 1995. They often assume that both the incoming and outgoing shots are static scenes and the transition only lasts no longer than half a second. This type of model is too simplified to model gradual shot transitions that are often present in films/videos.

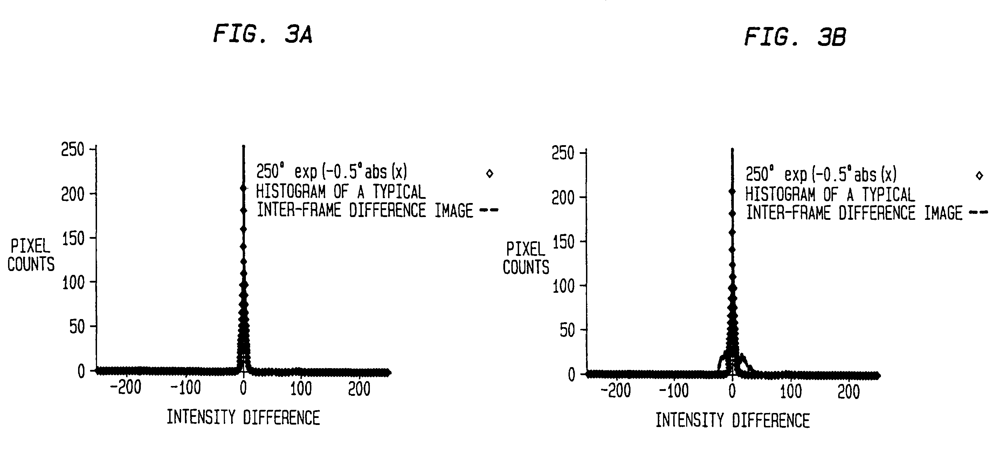

Another assumption researchers often make is that the frame difference signal computed at each individual pixel can be modeled by a stationary independently identically distributed random variable which obeys a known probability distribution such as the Gaussian or Laplace. See, for example, H. Zhang, A. Kankanhalli, and S. W. Smoliar, ``Automatic Parsing of Full-Motion Video," ACM Multimedia Systems, 1, pp.10-28, 1993. This assumption is generally not true, as shown in Figure 3 which shows the histogram of a typical inter-frame difference image that does not correspond to a shot change. Note that the shape changes as camera moves (left) slowly versus (right) fast. Neither a Gaussian nor a Laplace fits both curves well. A Gamma function fits the left curve well, but not the right curve.

This fact invalidates cut detection approaches that are based on $\chi^2$ tests since these tests are derived statistically from the above assumption. See, for example, G. Casella and R. L. Berger, Statistical Inference, Duxbury Press, 1990.

In addition, existing methods assume that time-series difference metrics are stationary, completely ignoring the fact that such metrics are highly correlated time signals.

It is herein recognized that pixel-based and distribution-based difference metrics respond differently to different types of shots and shot transitions. For example, the former is very sensitive to camera moves, but is a very good indicator for shot changes. On the other hand, distribution-based metrics are relatively insensitive to camera and object motion, but can produce little response when two shots look quite different but have similar distributions. It is an object of the present invention to combine both measures in cut detection.

Unlike existing methods which have no notion of time series nor non-stationarity, the present invention treats a sequence of difference metrics as nonstationary time series signals and models the time trend deterministically. The sequence of difference metrics, no matter how they are computed, are just like any economic or statistic data collected over time. In this view, shot changes as well as the 3:2 pull-down process will both create observation outliers in time series, while the gradual shot transition and gradual camera moves will produce innovation outliers. Fox defines the observation outlier to be the one that is caused by a gross error of observation or recording error and it only affects a single observation. See A. J. Fox, ``Outliers in Time Series," Journal of the Royal Statistical Society, Series B, 34, pp. 350-363, 1972.

Similarly, the innovation outlier is the one that corresponds to the situation in which a single ``innovation" is extreme. This type of outlier affects not only the particular observation but also subsequent observations. A typical model that represents observation outliers (occurs at $t=q$ ) is

$$d_t = f(d_{t-r}, d_{t-r+1}, \cdots, d_t) + u_t \text{ if } t \neq q \qquad \text{Eq. 8}$$

$$d_t = f(d_{t-r}, d_{t-r+1}, \cdots, d_t) + u_t + \Delta \text{ otherwise}$$

where t $t$ represents the time index, $\Delta$ is the outlier, $f(d_{t-r}, d_{t-r+1}, \cdots, d_t)$ models the trend in the series, and

$$u_t = \sum_{r=1}^{p} \alpha_r d_{t-r} + z_t \qquad (t=p+1, \cdots, n) \qquad \text{Eq. 9}$$

In Equation (9), $\alpha_r$ are autoregressive parameters and the $\{z_t\}$ are independently $N(0, \sigma_z^2)$ (zero mean normal distribution with variance $\sigma_z^2$ ).

The model for innovation outliers is

$$d_t = f(d_{t-r}, d_{t-r+1}, \cdots, d_t) + \sum_{r=1}^{p} \alpha_r d_{t-r} + \Delta_t + z_t \qquad \text{Eq. 10}$$

where $\alpha_r$ and $\{z_t\}$ are defined as for equation (9) and the outlier $\Delta_t$ affects $d_t$ and, through it, subsequent observations $d_{t+1}, d_{t+2}, \cdots, d_n$ .

There are standard methods in the literature which detect both outliers. See, for example, B. Abraham and A. Chuang, ``Outlier Detection and Time Series Modeling," Technometrics, Vol. 31, No. 2, pp.241-248, May 1989; A. J. Fox, ``Outliers in Time Series," of the Royal Statistical Society, Series B, 34, pp. 350-363, 1972; L. K. Hotta and M. M. C. Neves, ``A Brief Review of Tests for Detection of Time Series Outliers," ESTADISTICA, 44, 142, 143, pp. 103-148, 1992.

These standard methods, however, can not be applied to the cut detection problem directly as yet for the following three reasons. First, most methods require intensive computation for example, least squares, to estimate time trend and autoregressive coefficients. This amount of computation is generally not desired. Second, the observation outliers created by slow motion and the 3:2 pull-down process could occur as often as one in every other sample, making the time trend and autoregressive coefficient estimation an extremely difficult process. Finally, since gradual shot transitions and gradual camera moves are indistinguishable in most cases, location of gradual shot transitions requires not only detection of innovation outliers but also an extra camera motion estimation step.

In the solution in accordance with the present invention, a zero-th order autoregressive model and a piecewise-linear function are used to model the time trend. With this simplification, samples from both the past and the future must be used in order to improve the robustness of time trend estimation. More than half of samples are discarded because the observation outliers created by slow motion and the 3:2 pull-down process could occur as often as one in every other sample. Fortunately, these types of observation outliers are least in value, and therefore could be identified easily.

After the time trend is removed, the remaining value is tested against a normal distribution $N(0,\sigma)$, which $\sigma$ can be estimated recursively or in advance.

To make the cut detection method more robust, a further application is made of the Kolmogorov-Smirnov test to eliminate false positives. This test is chosen because it does not assume a priori knowledge of the underlying distribution function. The traditional Kolmogorov-Smirnov test procedure compares the computed test metric with a preset significance level (normally at 95%). It has been used by some researchers to detect cuts from videos. See, for example, I. K. Sethi and N. Patel, ``A Statistical Approach to Scene Change Detection," SPIE Vol. 2420, Storage and Retrieval for Image and Video Databases III, pp. 329-338, 1995. This use of single preselected significance level completely ignores the nonstationary nature of the cut detection problem. It is herein recognized that the Kolmogorov-Smirnov test is properly used only if it takes into account the nonstationary nature of the problem. In other words, the significance level should be automatically adjusted to different types of video contents.

One way to represent video contents is to use measurement in both the spatial and the temporal domain together. For example, image contrast is a good spatial domain measurement, because the amount of intensity changes across two neighboring frames measures video content in the temporal domain. The adjustment should be made such that,

- the higher the image contrast is, (that is, the less the significance level), the more sensitive the cut detection mechanism should be, and
- the more changes occur in two consecutive images, the less sensitive the detection mechanism (that is, the higher the significance level) should be.

The traditional Kolmogorov-Smirnov test also can not differentiate the long shot from the close up of the same scene. To guard against such transitions, the present invention utilizes a hierarchical Kolmogorov-Smirnov test. In this hierarchical Kolmogorov-Smirnov test, each frame is divided into four rectangular regions of equal size and the traditional Kolmogorov-Smirnov test is applied to every pair of regions as well as to the entire image. This test therefore produces five binary numbers which indicate whether there is a change in the entire image as well as in each of the four sub-images.

Finally, instead of directly using these five binary numbers to eliminate false positives, the test result is only used in a qualitative sense. The significance in test result of the shot change frame is compared against that of its neighboring frames. These modifications will become better understood in a later portion of the description.

Despite many claims and attempts in the literature regarding detecting gradual shot changes, it is not possible to differentiate gradual shot transitions from gradual camera moves, since difference metrics associated with both cases are often indistinguishable. Zhang et al. present a hybrid algorithm that tries to differentiate gradual shot transitions from gradual camera moves based on camera motion analysis. See H. Zhang, C. Y. Low, and S. W. Smoliar, ``Video Parsing and Browsing Using Compressed Data," Multimedia Tools and Applications, 1, pp.89-111, 1995. However, it should be noted that camera motion estimation has been an active area of research in computer vision for more than a decade and a reliable motion estimation algorithm is yet to be seen. In the context of the present invention, it is recognized herein that, since no single cut detection algorithm can deliver 100\% recall rate, a cut browsing apparatus is required to provide access to misdetected shots. This browsing apparatus could also be used to identify gradual shot transitions. How will the browsing apparatus provide information to users without the need to play back the entire video is the most challenging task in designing such an apparatus.

In order to provide information to a user who can then identify missed and misdetected shots, this browsing apparatus should have the following three characteristics: First, it must present information different from what automatic cut detection algorithm extracts from the video. In addition, it should not try to present interpreted information to the user, since any such information could be the source of an error. Finally, the browsing apparatus should be fast and concise, providing another level of abstraction such that the need to play back the entire video can be avoided.

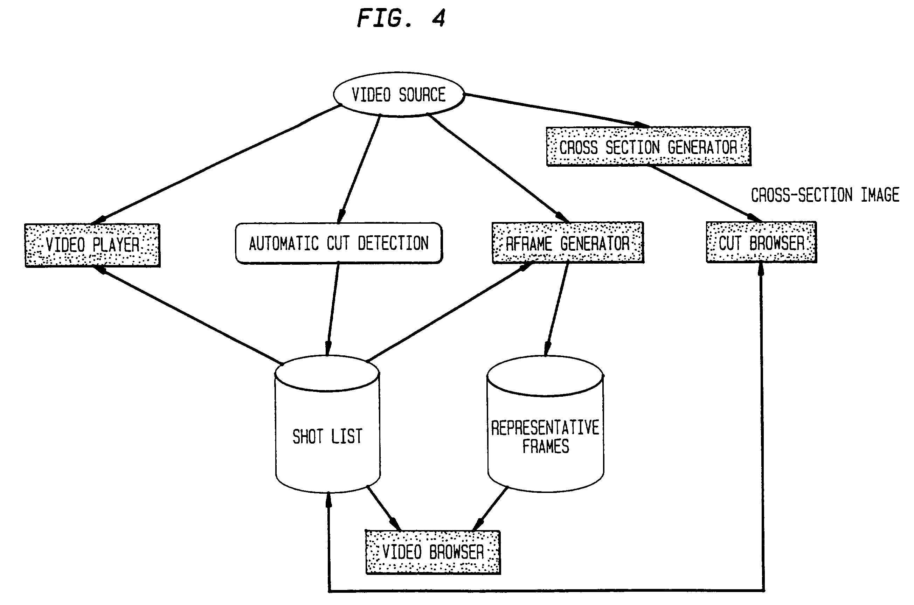

In the context of the present invention, browsing apparatus comprises a video player, a video browser, and a cut browser. See Figure 4. The cut browser forms the subject matter of a copending U.S. Patent Application Serial No. 08/576,272, entitled APPARATUS FOR DETECTING A CUT IN A VIDEO, filed on even date herewith in the name of the present inventors, and whereof the disclosure is herein incorporated by reference. The video browser forms the subject matter of U.S. Patent Application Serial No. 08/221,225, entitled REPRESENTING CONTENTS OF A SINGLE VIDEO SHOT USING RFRAMES, in the name of Arman et al., included, without its claims, in the present application as Appendix 1.

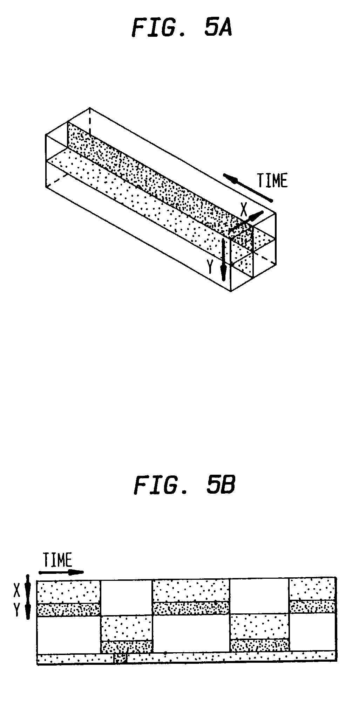

These three components provide three different levels of abstraction. Further details will be presented further on, but briefly, the cut browser presents two cross-section images, one is in a horizontal direction and the other in a vertical direction of the video volume. Each cross-section image is constructed by sampling one row (or column) from every image, and reducing the amount of information from a two-dimensional image to two one-dimensional image strips as shown in Figure 5, in which (a) shows two cross sections in video volumes and (b) shows a space-time image made up of two cross sections.

The horizontal and vertical cross-section images are combined, in the cut browser, into one image segmented into two bands according to the list of detected shots. This representation provides a level of abstraction just enough to reveal whether there is a missed or misdetected shot.

This representation allows the user to easily search the content of the video, to decide if the cut detection method may have missed or misdetected a shot, and to create or eliminate cuts in preparation for a multimedia content.

This particular set of three levels of abstraction is chosen for the following reasons. First, the original video must be included because it is the only raw information available. However, no one can afford to search information from the original video directly because video playback is a very time-consuming task. That is a reason to include the representative frames (Rframes) of each detected shot. Any automatic cut detection method can be used to provide this level of abstraction. Second, since no cut detection method offers 100\% accuracy rate, there will always be missed or misdetected shots. In order to provide the user a clue so as to avoid being affected by the imperfection of any cut detection method (or any automatic method in the matter) in the search of desired video clip, additional information should be provided that has the characteristics referred to above:

— it must be completely different and independent from what the automatic cut detection algorithm extracts from the video
— it should be raw information, but should not be the original video
— it should be concise

It is believed that the best choice is the cross-section image. A cross-section image is an image generated directly from the original video. The present implementation selects one in the horizontal and the other in the vertical direction of the video volume, although, in general, one can select any number of directions. The process of constructing a cross-section image is illustrated in Figure 5 . The horizontal (vertical) cross-section image is constructed by sampling the middle row (or the middle column) from every image and by collecting all samples over time. To provide a complete view of both cross-section images, they are combined into one image and then the image is segmented into two bands according to the list of detected shots.

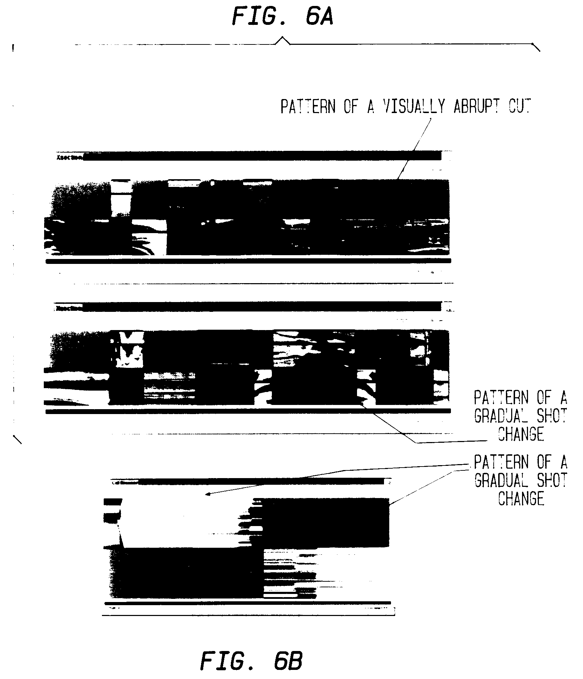

This representation provides a level of abstraction which reveals the continuity of video frames. For example, if there is a missed shot which is the result of a visually abrupt cut or camera break, a clear discontinuous pattern is discernible as shown in Figure 6(a). For cuts that are associated with gradual shot transitions such as dissolves, a blurred discontinuous pattern is apparent as shown in the bottom two pictures of Figure 6(b).

Five components are utilized herein: a video player, a video browser, a cut browser, a Rframe generator, and a cross-section generator. Their inter-relationship is shown in Figure 4. In this figure, the video source can be either an analog or a compressed digital video and the automatic cut detection module can be any automatic cut detection method as long as it outputs a list of shots in frame numbers. The video player, the video browser, and the cut browser are three major components, which are supported by two other components, the Rframe generator and the cross-section generator. The activities in all components are completely synchronized.

The Rframe generator takes the shot list as well as the original video and produces thumbnail pictures that represent each shot. Whenever the shot list is updated, it updates the list of thumbnail pictures. The video player plays back the original video and accepts requests coming from either the video browser or the cut browser. The playback can start from any video frame. In order to locate the desired video frame, either the time code or the byte offset is used, depending on whether the video source is an analog video or a digital compressed video respectively.

The video player also has a VCR-like user interface which implements functions such as pause, play, slow motion, fast forward, and rewind. It also provide a shot jump capability allowing the user to skip shots which are detected by the automatic cut detection method.

The video browser displays a list of thumbnail pictures representing each detected shot. It allows a user to quickly glance through a video to find the clip of interest. The desired one will be found if it is among the list of detected shots. The video browser will properly position itself by taking information from either the video player or the cut browser. When a video is being played or the cross-section image is clicked, the representative frame of the associated shot will be highlighted. When the cross-section image scrolls, the list of thumbnail pictures will scroll accordingly.

To provide information for missed or misdetected shots, the cut browser presents the cross-section image generated from the raw video. In the foregoing description, the types of patterns that could appear in the cross-section image when there is a shot change where described and explained. These patterns of cross-section images provide useful information for manual identification of missed or misdetected shots. When a user clicks on the cross-section image, the cut browser maps the mouse location to a frame number and sends the request to both the video player and the video browser. The video will start playing from that frame and the associated representative frame in the video browser will be highlighted.

The foregoing exemplary embodiment has been described in terms of two cross-section images; however, it is within the contemplation of the invention that a plurality of such images, which may be greater than two, can be utilized.

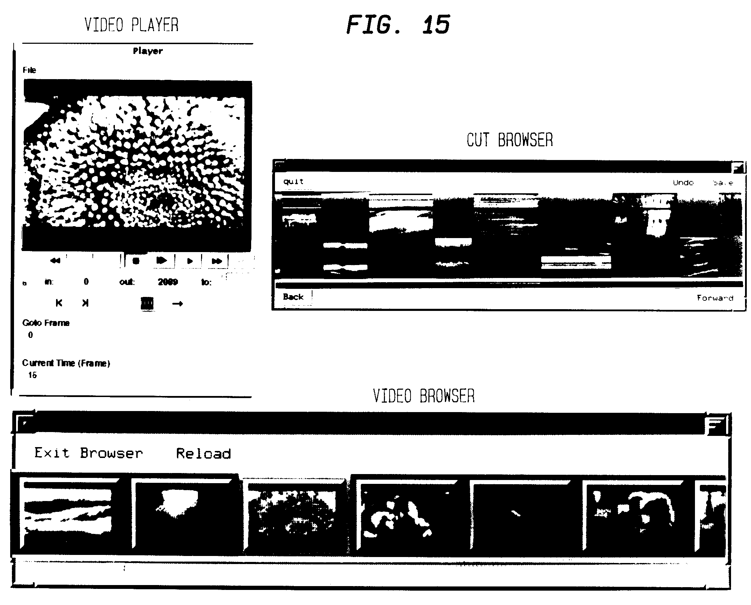

The user interface of the current invention is shown in Figure 15. In operation, initially, three windows display on the screen. To search the content of the video, the user would examine each representative frame in the video browser to see whether it is the desired shot. When the list of thumbnail pictures is being scrolled, the content of the cut browser will be updated to match the representative frame that is being highlighted. The user would clearly see if there is any missed shot between the current and the next shot. When the user is in doubt, they can simply click on the point which might start a missed shot in the cut browser to look at the content in the raw video. To decide if the cut detection method may have missed or misdetected a shot, the user could simply examine the cross-section image in the cut browser. If the user sees any pattern that might represent a missed or a misdetected shot, the user would then click on the point in the cut browser to look at the content of the raw video.

The cut browser also provides the editing capability. This editing function is extremely useful for authoring content-indexed multimedia materials. It allows a user to break any shot into two, or merge any two shots into one, through a mouse or a button click. When this event happens, the cross-section image will be reorganized into two bands and the shot list is updated. The Rframe generator will then update the list of representative frames.

For example, when all video frames are in the same shot and all shots are correctly detected, a clear continuous pattern in this cross-section image is seen, as explained above in reference to the example shown in Figure 6.

In addition, since these are also raw image data, no interpretation is presented and therefore no further error could be introduced.

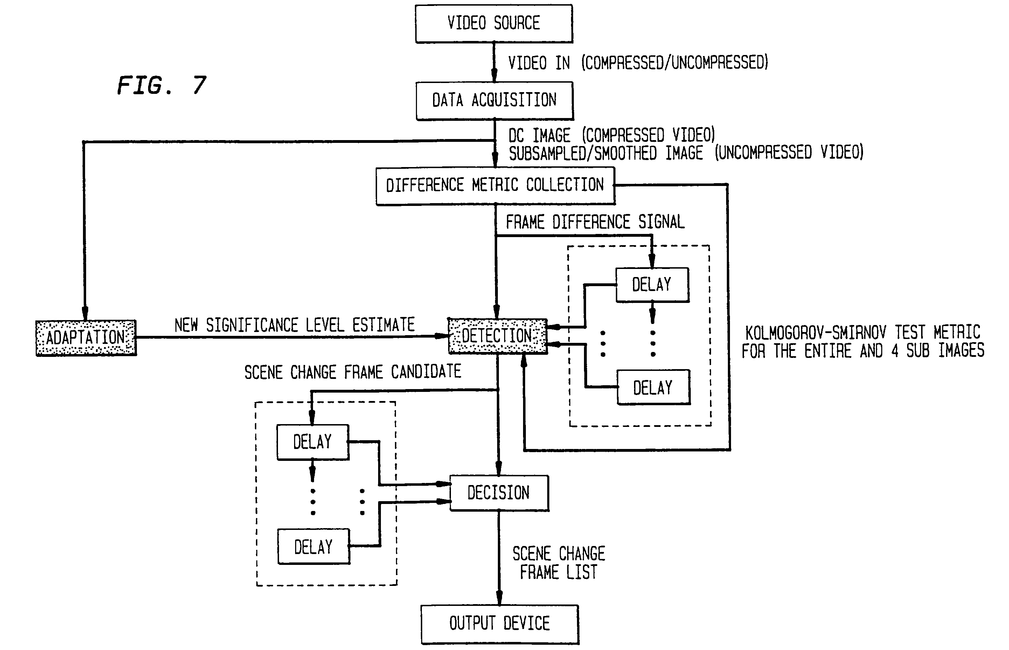

The problem analysis described in the previous sections is incorporated in the present inventive solution to the cut detection problem which allows a partitioning of a video into a set of shots comprising visually abrupt cuts or camera breaks. Figure 7 shows a flow diagram of a cut detection algorithm in accordance with the invention.

Unlike prior art methods which use either pixel-based or distribution-based difference metric, the present invention integrates both types of information in a new detection scheme. The invention includes an adaptive engine to provide the detection scheme with the ability to automatically adjust to different types of video contents. The result from the automatic cut detection is presented to the user through a cut browsing apparatus, where three tasks can be performed: to search the content of the video, to decide if the cut detection method may have missed or misdetected a shot, and to create or eliminate cuts.

The cut detection is herein formulated as a time series outlier detection problem. As shown in Figure 7, the system can take either uncompressed or compressed continuous video as the input. Experimentally, MPEG-1 compressed video has been utilized and a sequence of DC images generated using the approach described in B.-L. Yeo and B. Liu, ``On the Extraction of DC Sequence from MPEG Compressed Video,'' Proc. of ICIP, October 1995. Both the pixel-based and the distribution-based difference metric are then computed from these DC images (difference metric collection), while video contents are measured to provide up-to-date test criteria (adaptation). Information from both the distribution-based and pixel-based difference metric are fused (detection), after taking into account the new test criteria (significance level) provided by the adaptation step. Finally, a list of scene change frame candidates is produced and filtered, resulting in the final scene change frame list (decision).

DC images are reduced images formed from the collection of scaled DC coefficients in intra-coded DCT compressed video. Such images can be directly reconstructed from JPEG or movie-JPEG videos. For MPEG and H.261 videos, fast reconstruction of DC images from motion-compensated pictures requires some levels of approximation. The technique described in B.-L. Yeo and B. Liu, ``On the Extraction of DC Sequence from MPEG Compressed Video,'' Proc. of ICIP, October 1995 is herein applied to generate DC luminance images from every single frame of MPEG video, while the chrominance components are simply discarded. Briefly, technique extracts the DC image corresponding to motion-compensated pictures directly from the compressed stream in the following manner. The technique first locates, for each block of interest, four original neighboring blocks from which the current block of interest is derived. It then approximate the DC term of each block of interest by the weighted sum of the DC's of the four original neighboring blocks, where the weights are simply the fraction of area occupied by the current block.

It is noted, however, that this technique is not necessary in the realization of the present invention. Alternatively, one can take uncompressed video frames and subsample them to create the same size of images to feed into the apparatus in accordance with the invention.

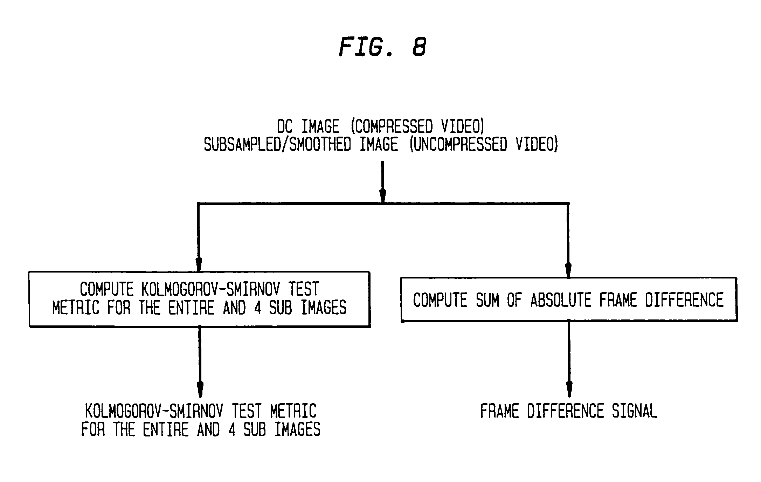

In this step, both pixel-based and distribution-based difference metrics are collected as shown in Figure 8, which shows the sub-diagram of the difference metric collection step. In accordance with the invention, the pixel-based difference metric for each frame $t$ is the sum of absolute frame difference,

$$\sum_{ij} |f_{ij}^t - f_{ij}^{t-1}|$$

where $f_{ij}^t$ represents the intensity value at pixel location ($i,j$) in frame **t** $t$ .

The distribution-based difference metric is the traditional Kolmogorov-Smirnov test metric, except that one each is computed herein for the entire image as well as its four equally divided sub-regions.

Adaptation

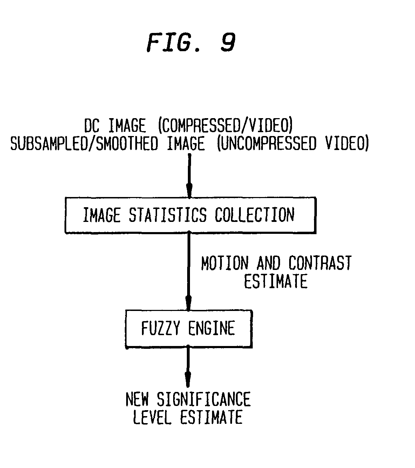

The purpose of this step is to provide the detection scheme with the ability to automatically adjust to different video contents. Figure 9 shows the sub-diagram of the adaptation step. As shown in Figure 9, statistics from each DC image and each pair of DC images are first collected to represent the current video content. They are the image contrast and the motion estimate. The image contrast estimate is computed based on a recursive scheme to suppress the influences of sudden lighting changes.

$$contrast_t=(1-\tau)\,contrast_{t-1}+\tau\sigma_{t-1}$$

where $\sigma_{t-1}$ is the intensity variance estimate of the DC image at time $t$-1 and $\tau$ equals 0.6 in the present exemplary embodiment.
Similarly, the motion estimate is computed as follows

$$motion_t=(1-\tau)\,motion_{t-1}+\tau\sum_{ij}(\frac{|f_{ij}^{t-1}-f_{ij}^{t-2}|}{N})$$

where $f_{ij}^{t-1}$ is the intensity value at pixel location ($i,j$) of the DC image at time $t$-1 , $N$ is the size of the image, and $\tau$ equals 0.6 in the present exemplary embodiment.

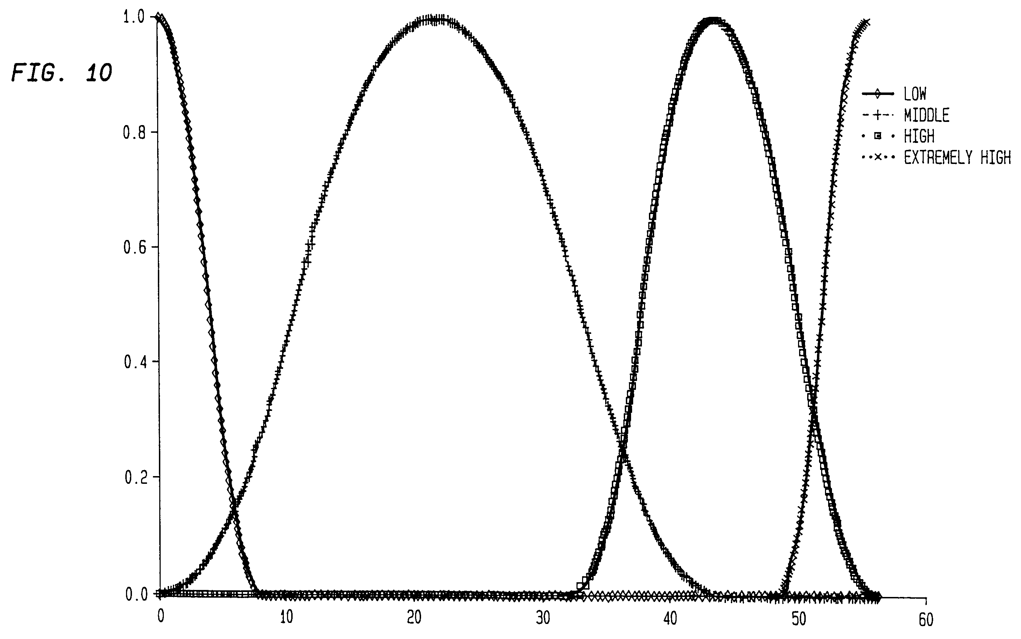

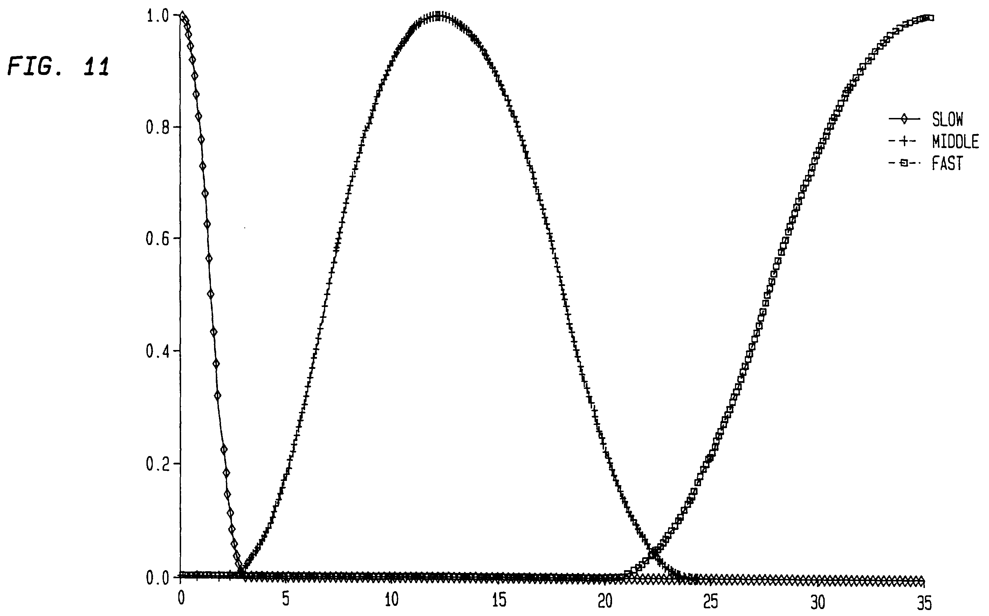

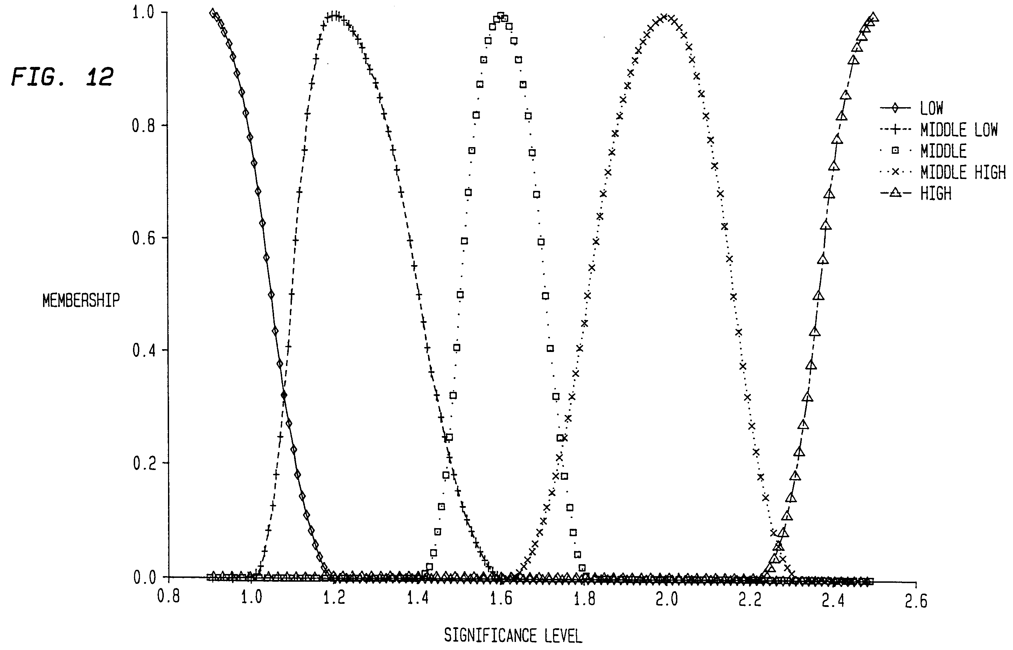

Both the image contrast and the motion estimates are then taken into a fuzzy engine to compute a new significance level for the hierarchical Kolmogorov-Smirnov test. The fuzzy engine uses a quadratic membership function, where each contrast measurement is divided into four classes (low, middle, high, and extremely high), each motion estimate into three classes (slow, middle, and fast), and each significance level ($K_\alpha$) into five classes (high, middle high, middle, middle low, and low), as shown in Figures 10, 11, and 12, illustrating the membership functions of the fuzzy engine in accordance with the invention. Figures 10, 11, and 12 show the membership functions of contrast estimate, motion estimate, and $K_\alpha$ which is proportional to significance level, respectively.

Based on definitions of membership functions, the fuzzy rules are stated in a simple IF/THEN format, where values are combined using AND (minimum) or OR (maximum) operations. All rules are listed in the following Table 1.

TABLE 1

IF contrast is low and motion is slow, THEN significance level is middle

IF contrast is middle and motion is slow THEN significance level is middle low

IF contrast is high and motion is slow THEN significance level is middle low

IF contrast is extremely high and motion is slow THEN significance level is low

IF contrast is low and motion is fast THEN significance level is high

IF contrast is middle and motion is fast THEN significance level is middle high

IF contrast is high and motion is fast THEN significance level is middle

IF contrast is extremely high and motion is fast THEN significance level is middle low

IF contrast is low and motion is middle THEN significance level is high IF contrast is middle and motion is middle THEN significance level is middle high

IF contrast is high and motion is middle THEN significance level is middle high

IF contrast is extremely high and motion is middle THEN significance level is middle

Since all rules have given different values for the significance level, they must be resolved or defuzzified to yield a crisp final output value. Here, the centroid method of Zadeh et al. is used to find the center of gravity of the combined output shape, ensuring all rules contributing to the final crisp result. For the centroid method, see L. A. Zadeh and J.

Kacprzyk, Fuzzy Logic for the Management of Uncertainty, John Wiley & Sons, Inc., 1992. It is noted that, although the above fuzzy membership functions and rules serve the purpose of the invention, these membership functions nor fuzzy rules have not been optimized.

Detection

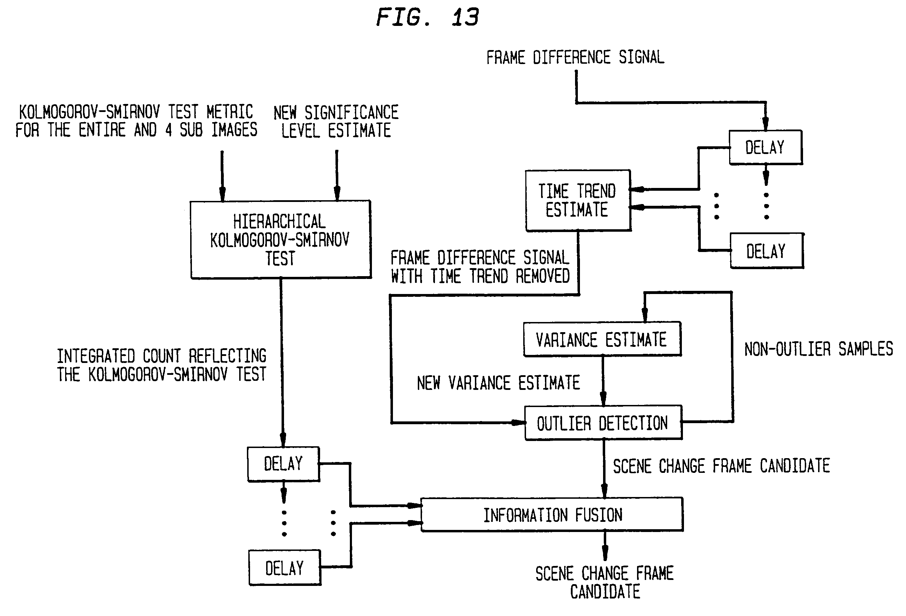

In this detection step, shown in the sub-diagram of Figure 13, both pixel-based and distribution-based difference metrics are independently tested and the results are fused to output scene change frame candidates. Pixel-based difference metrics are treated as time series signals, where both visually abrupt cuts and the duplication of frames create observation outliers obeying Equation (8).

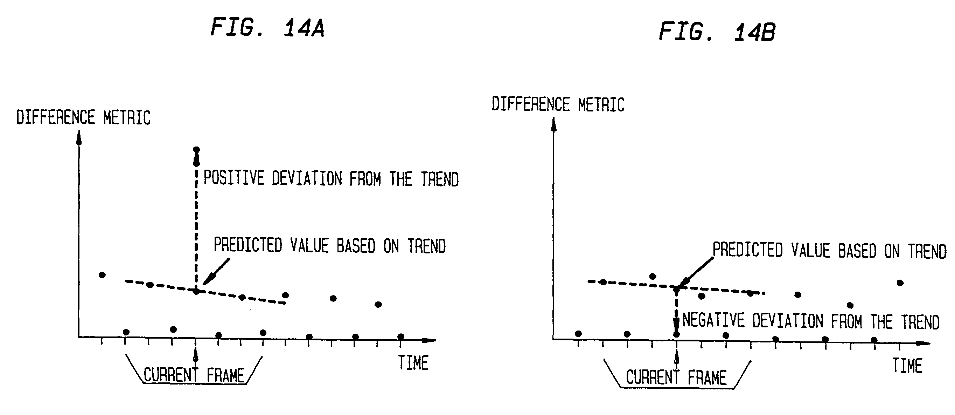

In time trend estimation, a piecewise linear function is used to model the trend, as opposed to a more sophisticated model. Robust statistics also utilized to avoid the influence of type II observation outliers in trend estimation (see the definitions previously presented). The difference metrics associated with frames from three frames before until three frames after the current frame are sorted. Assume they are ordered, $\hat{d}_1 < \cdots \hat{d}_7$. $\hat{d}_5$ and $\hat{d}_6$ are used to fit a line. The interpolated/extrapolated value at the current frame is the predicted value from the trend analysis. This process is shown in Figure 14, which shows an example of trend estimation (left) where a type I observation outlier is detected. Note that type II observation outliers exist in every other frame, wherein are plotted two sets of pixel-based difference metric (for example, sum of absolute difference against time. In both examples, frame 5 is the current frame, which is associated with a visually abrupt cut and a duplicated frame in the first and the second example respectively.

First, samples are collected from frame 2 to frame 8 and sorted out in ascending order. Four smallest values (samples from frame 2, 4, 6, 8 and from frame 3, 5, 6, 7 in the first and the second example respectively) are then discarded. This is because in any 7 frame interval the most type II observation outliers that one could have are four. In addition, the biggest value is also discarded (sample from frame 5 and from frame 4 in the first and the second example) because it may correspond to the visually abrupt cut as illustrated in Figure 14.

Finally, samples from frame 3, 7 (in the first example), and from frame 2, 8 (in the second example) are chosen to fit a straight line. In the first example, the interpolated value at the current frame is much smaller than the actual value (positive deviation from the trend), whereas the interpolated value is much bigger than the actual value (negative deviation from the trend) in the second case. The former will be defined as type I observation outlier in the context of cut detection and the latter, type II observation outlier.

After the time trend is estimated, it is subtracted from the observed time series and then test the hypothesis, $H_0:\Delta=0$ , against the alternative, $H_1:\Delta\neq0$ in Equation (8). A practical solution is obtained by considering a simple criterion of the form

$$\lambda_q = \frac{\tilde{\Delta}}{\hat{\sigma}_{\tilde{\Delta}}}$$

where $\tilde{\Delta}$ is the estimate of the displacement in the $q$th observation and $\hat{\sigma}_{\tilde{\Delta}}$ is the estimate of the variance of $\tilde{\Delta}$. $\hat{\sigma}_{\tilde{\Delta}}$ can be estimated by spectral methods (see U. Grenander and M. Rosenblatt, Statistical Analysis of Stationary Time Series, New York: Wiley, 1966, or, in accordance with the present exemplary embodiment of the invention, by substituting usual estimates of $\sigma_z$ and $\alpha_r(r=1,2,\cdots,p)$ into

$$\hat{\sigma}_{\tilde{\Delta}} = \frac{\sigma_z^2}{1+\alpha_1^2+\cdots+\alpha_p^2}$$

Note that $\alpha_r(r=1,2,\cdots,p)$ and $\sigma_z$ are the same as in Equation (9). For performance reasons in the present exemplary embodiment of the invention, a zeroth $th$ -order autoregressive model is assumed, and therefore, $\alpha_r=0$ $(r=1,2,\cdots,p)$.

Finally, for all samples that are identified as observation outliers, if the predicted value from the trend is less than the observed, the frame is marked as a possible shot change frame candidate.

Variance Estimate

For those observed samples which are neither type I nor type II observation outliers, they are utilized to update the variance estimate $\sigma_z$ using the following formula:

$$\sigma_z = (1-\tau)\sigma_z + \tau(\textit{frame difference signal with trend removed})$$

where $\tau$ equals 0.6.

Hierarchical Kolmogorov-Smirnov test

As described in previous sections, the Kolmogorov-Smirnov test is concerned with the agreement of two sets of observed values. The null hypothesis is that two samples come from populations with the same distribution function F(x) $F(x)$ . It can be shown that

$$Prob(d_t > K_\alpha \sqrt{\frac{2}{N}}) = \alpha$$

where $K_\alpha$ represents a constant depending on the level of significance $\alpha$ and is available in tabular form from most statistics books. See, for example, J. D. Gibbons and S. Chakraborti, Nonparametric Statistical Inference, Marcel Dekker, Inc., 1992. $N$ is the size of the image the statistic is collected upon. $d_t$ , defined to be

$$max_j |EDF_t(j) - EDF_{t-1}(j)| ,$$

is constructed directly from the histogram of each DC image (see Equation (4).

In each frame, a new significance level $\alpha$ is acquired from the adaptation step. $\alpha$ is used in the test involved not only the entire image but also each of its four equally divided sub images. Assume that $n$ out of 4 regions show changes. The integrated count is defined as follows.

$$KS_t = n*2 + 1 \quad \text{if the statistics based on the entire image}$$

$$\text{shows} \qquad \text{a change} \} \qquad (12)$$

$$KS_t = n*2 \qquad \text{otherwise} \}$$

This integrated count weights the change detected from any one of 4 regions twice more than the change detected from the entire image.

In this stage, the integrated count produced by the Hierarchical Kolmogorov-Smirnov test is used to eliminate false positives produced by the time series outlier detection process. Denote the integrated count produced for frame $t$ by $\Phi_t$ . The system eliminates a scene change frame candidate if

When the system reaches this step, most false positives will have been eliminated. However, there could still be some due to flash light or extremely fast camera motion. A criterion can be set up to eliminate such false positives. The list of detected cut frames is stored in a delay memory as shown by the dashed box attached to the decision step in Figure 7 and examine the distance between any two cuts. Any cut that occurs in a distance less than a preset value (in the present exemplary embodiment, five frames) will be eliminated.

The proposed cut browsing apparatus contains three basic elements: the Video Player, the Video Browser, and the Cut Browser. These three elements provide video browsing at three different levels of abstraction. The video player and the cut browser both present only raw video material, although in the latter case, the presented materials are at a different level of abstraction. However, the video browser presents interpreted information about shots in the video. Together, these three components offer the best tool to any user who would like to perform the following three tasks: to search the content of the video, to decide if the cut detection method may have missed or misdetected a shot, and to create or eliminate cuts.

The proposed cut browsing apparatus works as follows. When it is started, three windows display on the screen as shown in Figure 15, which shows the cut browsing apparatus.

The video browser shows all detected shots using representative frames (Rframes), while the cut browser displays the cross section image made from the entire video. The activities in all three windows are completely synchronized. For example, if the user use the mouse to click on any point in the cut browser, the associated representative frame in the video browser will be highlighted and the video player will start playing back the video from the same point. Whenever the video browser gets scrolled, the cross-section image scrolls accordingly.

To carry out the first function, namely to search the content of the video, the user would examine each representative frame in the video browser to see whether it is the desired shot. For every shot, the user would also examine the corresponding cross-section image in the cut browser to see if there is any pattern of missed shots. When any point is in doubt, the user would click on the point in the cut browser to look at the raw video playback in the video player.

To decide if the cut detection method may have missed or misdetected a shot, the user could simply examine the cross-section image in the cut browser. If there is any pattern of missed or misdetected shots, the user would then click on the point in the cut browser to look at the raw video playback in the video player.

The cut browser also provides the editing capability. A user can break any shot into two or merge any two shots into one through a mouse or a button click. When this event happens, the cross-section image will be segmented differently and the list of representative frames will get updated as well.

***The cut detection algorithm in accordance with the invention was applied to 24 video clips which included more than 149,000 MPEG-1 PAL and NTSC video frames. These videos come in a variety of types including movie trailers, cartoons, and sports videos, as listed in Table 2, following. Table 2 also shows the number of abrupt cuts ($N_c$) , the number of missed cuts (N_{m}) ($N_m$) , and the number of false detected cuts ($N_f$) . These are experimental results from the automatic cut detection method in accordance with the invention. For those shots that are missed or misdetected, they all show clear patterns in cross-section images and therefore are easily identified manually using the present cut browsing apparatus.

The present invention is believed to provide a recall and precision rate in the order of 99% and can detect from reading the video to the output of shot, change frames, close or near the video rate. The cut browsing apparatus has a cut browsing apparatus capable of substantially achieving 100 % recall rate. The invention takes into account the non-stationary nature of the cut detection problem, and has been tested on a variety of videos and over 149,000 video frames.

Clearly, the present invention can be implemented in conjunction with the use of a suitably programmed digital computer, using programming techniques known in the art.

While the present invention has been described by way of exemplary embodiments, these are not intended to be limiting and various changes and modifications will be apparent to those skilled in the art to which it pertains. For example, various details can be rearranged in the screens of the browsers without departing from the spirit of the invention. Furthermore, various alternative slicing planes for deriving cross section images can be substituted in a manner consistent with the invention. These and like changes are intended to be within the scope and contemplation of the invention which is defined by the claims following.

## Claims

1. Cut browsing and editing apparatus for video images, comprising:

   a video player;
   a video browser, coupled to said video player; and
   a cut browser coupled to said video browser.

2. Cut browsing apparatus as recited in Claim 1, wherein said video player and said cut browser present only raw video material.

3. Cut browsing apparatus as recited in Claim 2, wherein said cut browser presents material at a different level of abstraction to that presented by said video player and said video browser presents interpreted information about shots in said video images.

4. Cut browsing apparatus for video images, comprising:

   a video player;
   a video browser, coupled to said video player;
   a cut browser coupled to said video browser; and
   a display, coupled to the foregoing, said display providing a three-window display on a screen.

5. Cut browsing apparatus as recited in Claim 4, wherein each window of said three-window display is respectively allocated to one of said ideo player, video browser, and said cut browser.

6. Cut browsing apparatus as recited in Claim 5, wherein said windows respond synchronously activities including computer mouse pointer control, scrolling, and high-lighting.

7. Cut browsing apparatus as recited in Claim 4, wherein said video browser displays detected shots using representative frames (Rframes), and said cut browser displays a cross sectional image made from an entire video sequence.

8. Cut browsing apparatus as recited in Claim 7, wherein a user can select, as by mouse clicking, a point on said cross sectional image on said cut browser so as to view a corresponding image in raw video playback on said video player.

9. Cut browsing apparatus as recited in Claim 8, wherein said cut browser permits editing by a user so as to break a shot into at two shots and so as to merge any two shots into one, as by clicking a mouse.

10. Cut browsing apparatus as recited in Claim 8, wherein said cut browser permits editing by a user so as to break a shot into a plurality of shots and so as to merge a number of said plurality of shots into one, as by clicking a mouse.

11. Cut browsing apparatus as recited in Claim 9, wherein said editing causes resegmenting of said cross sectional image.

12. Apparatus for detecting a cut in a video in accordance with claim 11, including means for presenting two cross-section images of said video images, a horizontal cross section image in a horizontal direction and a vertical cross section image in a vertical direction of the video volume.

13. Apparatus for detecting a cut in a video in accordance with claim 10, including means for presenting at least two cross-section images of said video images, whereof at least one shot is horizontal cross section image in a horizontal direction and at least one is vertical cross section image in a vertical direction of the video volume.

14. Cut browsing apparatus for video images, comprising:

    a video player;
    a video browser, coupled to said video player;
    a cut browser coupled to said video browser; and
    a display, coupled to the foregoing, said display providing a three-window display on a screen, wherein each window of said three-window display is respectively allocated to one of said ideo player, video browser, and said cut browser;
    said windows respond synchronously activities including computer mouse pointer control, scrolling, and high-lighting;
    said video browser displays detected shots using representative frames (Rframes), and said cut browser displays two cross-section images of said video images, a horizontal cross section image in a horizontal direction and a vertical cross section image in a vertical direction of the video volume.

15. Cut browsing apparatus for detecting a cut in a video in accordance with claim 12, wherein each cross-section image is constructed by sampling one row (or column) from every image, and reducing the amount of information from a two-dimensional image to two one-dimensional image strips.

16. Cut browsing apparatus for detecting a cut in a video in accordance with claim 13, wherein said horizontal and vertical cross-section images are combined into one image segmented into at least two bands according to a list of detected shots, whereby a level of abstraction is presented that is just enough to reveal whether there is a missed or misdetected shot.

17. Cut browsing apparatus for video images, comprising:

    a video player;
    a video browser, coupled to said video player;
    a cut browser coupled to said video browser; and
    a display, coupled to the foregoing, said display providing on a screen respective window displays for each of said video player, video browser, and cut browser, such that activities in all three are completely synchronized.

18. Cut browsing apparatus as recited in Claim 17, wherein said windows respond synchronously activities including computer mouse pointer control, scrolling, and high-lighting.

19. Cut browsing apparatus as recited in Claim 18, wherein a user can select an image, as by mouse clicking, to view on said cut browser an image corresponding to a selected raw video image on said video player.

20. Cut browsing apparatus for video images, comprising:

a video player;
a video browser, coupled to said video player;
a cut browser coupled to said video browser; and
a display, coupled to the foregoing, said display providing a three-window display on a screen, wherein each window of said three-window display is respectively allocated to one of said ideo player, video browser, and said cut browser;
said windows respond synchronously activities including computer mouse pointer control, scrolling, and high-lighting;
said video browser displays detected shots using representative frames (Rframes), and said cut browser displays a plurality of cross-section images of said video images, whereof one is a horizontal cross section image in a horizontal direction and one is a vertical cross section image in a vertical direction of the video volume.

21. Cut browsing apparatus for detecting a cut in a video in accordance with claim 20, wherein each cross-section image is constructed by sampling one row (or column) from every image, and reducing the amount of information from a two-dimensional image to a plurality of one-dimensional image strips.

22. Cut browsing apparatus for detecting a cut in a video in accordance with claim 20, wherein said cross-section images are combined into one image segmented into a plurality of bands according to a list of detected shots, whereby a level of abstraction is presented that is enough to reveal whether there is a missed or misdetected shot.

## FIG. 1

VIDEO SOURCE

VIDEO IN (COMPRESSED/UNCOMPRESSED)

DATA ACQUISITION

DC IMAGE (COMPRESSED VIDEO)
SUBSAMPLED/SMOOTHED IMAGE (UNCOMPRESSED VIDEO)

DIFFERENCE METRIC COLLECTION

DIFFERENCE METRIC (PIXEL-BASED/DISTRIBUTION-BASED)

DELAY

DETECTION

DELAY

SCENE CHANGE FRAME CANDIDATE

DELAY

DELAY

DECISION

SCENE CHANGE
FRAME LIST

OUTPUT DEVICE

FIG. 2

FIG. 3A

FIG. 3B

EP 0 780 844 A2

# FIG. 4

VIDEO SOURCE

CROSS SECTION GENERATOR

CROSS-SECTION IMAGE

VIDEO PLAYER

AUTOMATIC CUT DETECTION

RFRAME GENERATOR

CUT BROWSER

SHOT LIST

REPRESENTATIVE FRAMES

VIDEO BROWSER

EP 0 780 844 A2

## FIG. 5A

TIME

X

Y

## FIG. 5B

TIME

X
Y

## FIG. 6A

PATTERN OF A VISUALLY ABRUPT CUT

PATTERN OF A
GRADUAL SHOT
CHANGE

PATTERN OF A
GRADUAL SHOT
CHANGE

## FIG. 6B

FIG. 7

VIDEO SOURCE

VIDEO IN (COMPRESSED/UNCOMPRESSED)

DATA ACQUISITION

DC IMAGE (COMPRESSED VIDEO)
SUBSAMPLED/SMOOTHED IMAGE (UNCOMPRESSED VIDEO)

DIFFERENCE METRIC COLLECTION

FRAME DIFFERENCE SIGNAL

DELAY

DELAY

ADAPTATION

NEW SIGNIFICANCE LEVEL ESTIMATE

DETECTION

KOLMOGOROV-SMIRNOV TEST METRIC
FOR THE ENTIRE AND 4 SUB IMAGES

SCENE CHANGE FRAME CANDIDATE

DELAY

DELAY

DECISION

SCENE CHANGE
FRAME LIST

OUTPUT DEVICE

EP 0 780 844 A2

## FIG. 8

DC IMAGE (COMPRESSED VIDEO)
SUBSAMPLED/SMOOTHED IMAGE (UNCOMPRESSED VIDEO)

| COMPUTE KOLMOGOROV-SMIRNOV TEST METRIC FOR THE ENTIRE AND 4 SUB IMAGES | COMPUTE SUM OF ABSOLUTE FRAME DIFFERENCE |

KOLMOGOROV-SMIRNOV TEST METRIC
FOR THE ENTIRE AND 4 SUB IMAGES

FRAME DIFFERENCE SIGNAL

EP 0 780 844 A2

*FIG. 9*

DC IMAGE (COMPRESSED/VIDEO)
SUBSAMPLED/SMOOTHED IMAGE (UNCOMPRESSED VIDEO)

| IMAGE STATISTICS COLLECTION |
| --- |

MOTION AND CONTRAST
ESTIMATE

| FUZZY ENGINE |
| --- |

NEW SIGNIFICANCE
LEVEL ESTIMATE

EP 0 780 844 A2

FIG. 10

FIG. 11

EP 0 780 844 A2

FIG. 12

## FIG. 13

FRAME DIFFERENCE SIGNAL

KOLMOGOROV-SMIRNOV TEST METRIC
FOR THE ENTIRE AND 4 SUB IMAGES

NEW SIGNIFICANCE
LEVEL ESTIMATE

DELAY

TIME TREND
ESTIMATE

DELAY

HIERARCHICAL
KOLMOGOROV-SMIRNOV
TEST

FRAME DIFFERENCE SIGNAL
WITH TIME TREND REMOVED

VARIANCE ESTIMATE

NON-OUTLIER SAMPLES

INTEGRATED COUNT REFLECTING
THE KOLMOGOROV-SMIRNOV TEST

NEW VARIANCE ESTIMATE

OUTLIER DETECTION

DELAY

SCENE CHANGE FRAME CANDIDATE

INFORMATION FUSION

DELAY

SCENE CHANGE FRAME
CANDIDATE

EP 0 780 844 A2

33

FIG. 14A

FIG. 14B

EP 0 780 844 A2

FIG. 15

VIDEO PLAYER

CUT BROWSER

VIDEO BROWSER

EP 0 780 844 A2